# EUROPEAN PATENT SPECIFICATION

(11) **EP 1 839 015 B1**
(45) Date of publication and mention of the grant of the patent: **08.04.2015**
(21) Application number: 06710615.3
(22) Date of filing: 03.01.2006
(51) Int. Cl.: G01D 5/244, G01D 5/347

(54) **A ROTARY ENCODER CONTROL CIRCUIT**
STEUERSCHALTUNG FÜR EINEN DREHGEBER
CIRCUIT DE COMMANDE A CODEUR ROTATIF

(30) Priority: 03.01.2005 TR 200500033
(43) Date of publication of application: 03.10.2007
(73) Proprietor: Arçelik Anonim Sirketi, 34950 Istanbul (TR)
(72) Inventor: YUCE, Ahmet Ihsan Arcelik Anonim Sirketi, 34950 Istanbul (TR)
(74) Representative: Louis Pöhlau Lohrentz
(86) International application number: PCT/IB2006/050015
(87) International publication number: WO 2006/072902

(56) References cited:
- DE-A1- 2 455 620
- DE-A1- 10 302 004
- US-A- 4 046 017

## Description

The present invention relates to a rotary encoder control circuit in which faulty reading is prevented.

The rotary encoders produce output signals in form of pulsing waves and are used in measuring position, speed and distance. The rotary encoders are preferred in electronic systems such as radio/tapes, music sets especially because of their soft rotating feel and low cost.

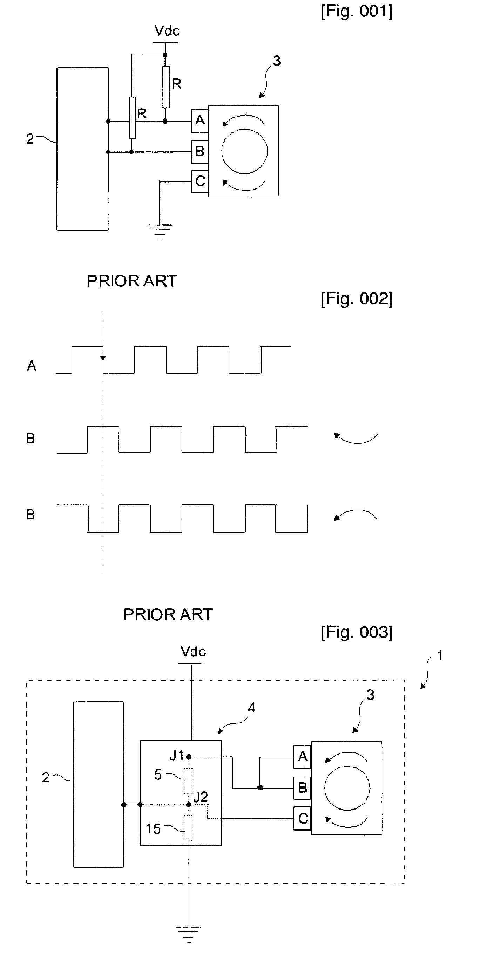

In state of the art, the rotary encoders (3) have three output terminals named A, B and C. Of these, A and B output terminals are connected to the microprocessor (2) and are utilized as data transmittal terminals for the microprocessor (2), and the C terminal is utilized as a common terminal (Figure 1). The rotary encoder (3) is connected to the microprocessor (2) so that one of its terminals is used as an interrupt terminal. There is a definite phase difference between the output signals received from the data transmission terminals (A and B) of the rotary encoder (3). Generally the signal received from the other data transmission terminal B is evaluated at the rising edge or the falling edge of the output signal received form preferably the output terminal A for detecting the direction of the rotation. When the rotary encoder (3) rotates in one direction, the falling edge of the signal received from A output terminal is at the front, and when it rotates in the opposite direction, the falling edge of the signal received from B output terminal is at the front. If the signal received from B output terminal is "1", it means that the rotary encoder (3) is rotating in one direction, if it is "0" then it is rotating in the opposite direction (Figure 2).

When the rotary encoder (3) is utilized in this manner, both of the data transmission terminals (A and B) are connected to the microprocessor (2), two terminals are used from the microprocessor (2) and the rotating direction of the rotary encoder (2) can be detected inaccurately as a result of the delays in the operation of the microprocessor (2). If this delay is less than the time difference between the falling edge of the signal received from output terminal A and the falling edge of the signal received simultaneously from output terminal B, then the rotation direction of the rotary encoder (3) can be detected accurately. When this time difference is greater, then the rotation direction of the rotary encoder (3) is detected erroneously and can result in doing just the opposite of the process that should be carried out. The interrupt terminal of the microprocessor (2) is especially utilized to prevent this delay. When the interrupt terminal of the microprocessor (2) is utilized, the microprocessor (2) slows down each time the rotary encoder (3) rotates since the interrupt terminal is active and the inaccurate detection of the rotation direction is encountered depending on the duration of the other interrupting routines.

In the state-of-the-art United States of America Patent no. US5276722, an absolute multi-revolution encoder having precision and high resolution is described.

DE10302004 shows a system of two rotary encoders. The output signals of the encoders are phase shifted by 90°. The control circuit of the encoder system includes an impedance network.

In DE2455620 a digital signal produced by a rotary encoder is transformed into an analog output signal.

US4046017 discloses a wheel balancing apparatus including a quadrature encoder.

The object of the present invention is to design a rotary encoder control circuit in which inaccurate reading is prevented.

The rotary encoder control circuit designed to fulfill the object of the present invention is shown in the attached figures, where:
Figure 1 - is the schematic view of a state-of-the-art rotary encoder control circuit.
Figure 2 - is the variation / time graph of the output signals derived from A and B output terminals of the state-of-the-art rotary encoder when the rotary encoder rotates clockwise and counterclockwise.
Figure 3 - is the schematic view of a rotary encoder control circuit.
Figure 4 - is the variation / time graph of the output signal derived at the readout circuit when the control circuit and the rotary encoder is rotated in one direction, clockwise for example
Figure 5 - is the variation / time graph of the output signal derived at the readout circuit when the control circuit and the rotary encoder is rotated in one direction, counterclockwise for example
Figure 6 - is the variation / time graph of the output signal derived at the readout circuit when the control circuit and the rotary encoder is rotated in one direction, clockwise for example in an alternative embodiment of the present invention.
Figure 7 - is the variation / time graph of the output signal derived at the readout circuit when the control circuit and the rotary encoder is rotated in one direction, counterclockwise for example in an alternative embodiment of the present invention.

Elements shown in the figures are numbered as follows:
1. Control circuit
2. Microprocessor
3. Rotary encoder
4. Readout circuit
5. ,15. Impedance circuit

The control circuit (1) of the present invention comprises a microprocessor (2), a rotary encoder (3) and a readout circuit (4) which converts the signals received from the rotary encoder (3) into analog signals, converting the clockwise and counterclockwise rotation movements into completely different output signals and prevents the rotary encoder (3) from making inaccurate reading.

The rotary encoder (3) comprises an outer case, a shaft connected to this case, rotating in its own axis and at least three terminals (A, B, C) composing the output terminals. Preferably two of these terminals are used as data transmission terminals (A and B), and one (C) is used as the common terminal.

In the control circuit (1) of the present invention, the output terminals (A, B, C) of the rotary encoder (3) act as two switching circuits where one terminal is jointly connected and there is a certain phase difference in between their opening / closing periods.

The readout circuit (4) comprises two impedance circuits (5 and 15), chosen with compatible values and connected in series to each other, one of which is earthed. The single terminal made by connecting two data transmission terminals (A and B) of the rotary encoder (3) is connected to the first impedance circuit (5) which is not earthed at point J1, and the common terminal C is connected at point J2 where two impedance circuits (5 and 15) are connected to each other. Consequently two terminals enter the readout circuit (4) from the rotary encoder (3) to be connected at points J1 and J2, one terminal leaves from point J2 by way of the readout circuit (4) to the microprocessor (2). Consequently since one of the two terminals reserved previously for the rotary encoder (3) in the microprocessor (2) is left idle, the microprocessor (2) is allowed to use this idle terminal for carrying out another process (Figure 3).

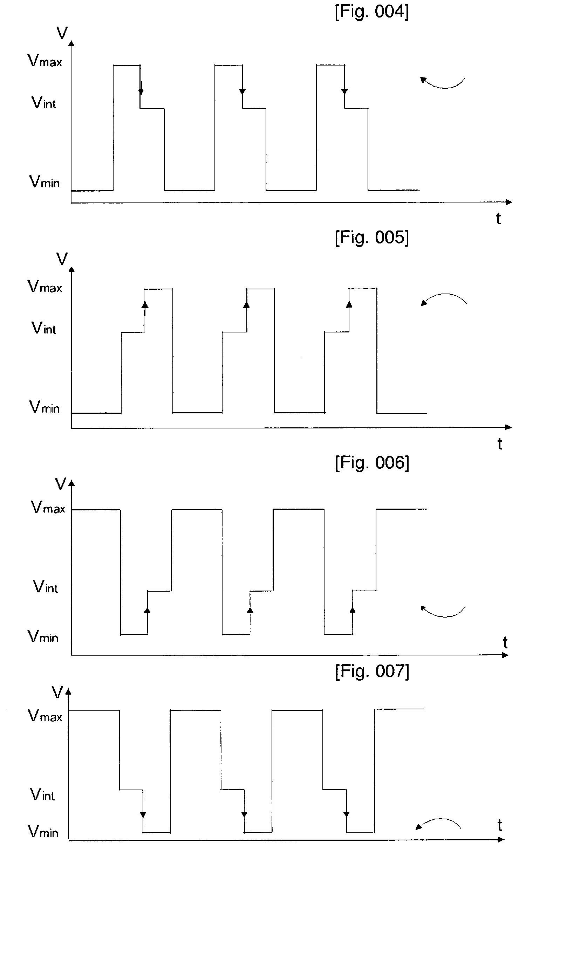

The output signal received from the two data transmission terminals (A and B) is in minimum voltage level (Vₘᵢₙ) since there isn't any generation of signals when the rotary encoder (3) is not rotated. The output signal received from the data transmission terminals (A and B) reaches a maximum voltage level (Vₘₐₓ) when the rotary encoder (3) is rotated by the user. The output signal received from data transmission terminals (A and B) with a certain phase difference, reaches an intermediate voltage value (Vᵢₙₜ) which is lower than the maximum voltage value (Vₘₐₓ) with the effect of the impedance circuit (5) between points J1 and J2. The output signal produced from the data transmission terminals (A and B) falls back to the initial minimum voltage level (Vₘᵢₙ) since no signal is produced when the rotation of the rotary encoder (3) is completed. The clockwise and the counterclockwise rotation movement of the rotary encoder (3) is converted into analog signals as different sequences of three different voltage levels by utilizing the readout circuit (4). If intermediate voltage value (Vₙₜ) is followed by the maximum voltage value (Vₘₐₓ) then it is detected that the rotary encoder (3) is rotating in one direction, if maximum voltage value (Vₘₐₓ) is followed by the intermediate voltage value (Vᵢₙₜ) then rotation is in the opposite direction (Figure 4 and Figure 5).

The analog input port of the microprocessor (2) can function both in analog and digital modes. Analog reading always takes longer than the numerical readings and delays the operation of the microprocessor (2). The (Vₘₐₓ) (Vᵢₙₜ) voltage values, the values of the impedance circuits (5, 15) are chosen in accordance where each is defined by one voltage value and the numerical signals (0 and 1) produced at two different positions are aligned with corresponding voltage values logic low Vₗ₋ₗ and Vₗ₋ₕ logic high. Until the "1" level is read numerically at the microprocessor (2) input, that is, the rotary encoder (3) is rotated and the analog input signals (Vₘₐₓ) or (Vᵢₙₜ) voltage values are read, numerical signal reading is done instead of analog reading and therefore the analog signal reading duration of the microprocessor (2) is reduced resulting in a faster operation.

Each of these three different voltage levels (Vₘₐₓ, V_{int and}Vₘᵢₙ) can easily be discriminated if the sampling rate of the microprocessor (2) is adequate. When sampling is delayed, since either the Vₘₐₓ - Vₘᵢₙ or the Vᵢₙₜ - -Vₘᵢₙ crossings or the Vmax, Vint voltage values where voltage values do not change will be read depending on the rotation direction of the rotary encoder (3), inaccurate detection of the rotation direction of the rotary encoder (3) will be out of the question and the ongoing process will continue. In an alternative embodiment of the present invention, feeding is made in opposite direction, that is, power source and the grounding is inverted (Figure 6 and Figure 7).

Numerical signals are converted into analog signals by using the readout circuit (4), clockwise and counterclockwise rotation movements are converted into completely independent wave forms and the analog signal readout duration of the microprocessor is reduced enabling faster operation.

## Claims

1. A control circuit (1) comprising
• a microprocessor (2) and
• a rotary encoder (3) having at least three output terminals (A, B, C) and
• a readout circuit (4) situated between the rotary encoder (3) and the microprocessor (2), and which prevents the rotary encoder (3) from taking inaccurate reading by converting the numerical signals received from the rotary encoder (3) into analog signals,
• where a first and a second of the three output terminals (A and B) are used as data transmission terminals (A and B) of the rotary encoder (3) and the third terminal as a common terminal (C) of the rotary encoder (3),
**characterized in that said** first and second output terminals (A and B) are connected at a single fourth terminal, **in that** said rotary encoder is further comprising two impedance circuits (5 and 15) connected in series to each other and wherein a first of the impedance circuits (5) is not earthed and a second of the impedance circuits (15) is earthed and **in that** said fourth terminal is connected to the first impedance circuit (5) at a first point (J1) and the third terminal (C) is connected at a second point (J2) where said two impedance circuits (5 and 15) are connected to each other, thereby the configuration being such that the output terminals (A, B, C) act as two switching circuits and there being a phase difference in their opening and closing periods, with the effect that the clockwise and counterclockwise rotations are converted into completely different output signals.

2. A control circuit (1) according to Claim 1 **characterized by** said readout circuit (4) comprising a single terminal that is connected to said second point and enters into the microprocessor (2).

## Patentansprüche

1. Steuerschaltung (1), Folgendes umfassend:
• einen Mikroprozessor (2) und
• einen Drehgeber (3) mit wenigstens drei Ausgangsanschlüssen (A, B, C)
und
• eine Ausleseschaltung (4), die zwischen dem Drehgeber (3) und dem Mikroprozessor (2) angeordnet ist und verhindert, dass der Drehgeber (3) ungenaue Messungen durchführt, indem die numerischen Signale, die vom Drehgeber (3) empfangen werden, in Analogsignale umgewandelt werden,
• wobei ein erster und ein zweiter der drei Ausgangsanschlüsse (A und B) als Datenübertragungsanschlüsse (A und B) des Drehgebers (3) benutzt werden und der dritte Anschluss als ein gemeinsamer Anschluss (C) des Drehgebers (3) benutzt wird,
**dadurch gekennzeichnet, dass** der erste und zweite Ausgangsanschluss (A und B) an einem einzelnen vierten Anschluss verbunden sind, **dass** der Drehgeber ferner zwei Impedanzschaltungen (5 und 15) umfasst, die in Reihe miteinander verbunden sind, wobei eine erste der Impedanzschaltungen (5) nicht geerdet ist und eine zweite der Impedanzschaltungen (15) geerdet ist, und **dadurch, dass** der vierte Anschluss an einem ersten Punkt (J1) mit der ersten Impedanzschaltung (5) verbunden ist und der dritte Anschluss (C) an einem zweiten Punkt (J2) verbunden ist, an dem die zwei Impedanzschaltungen (5 und 15) miteinander verbunden sind, wodurch die Konfiguration derart ist, dass die Ausgangsanschlüsse (A, B, C) als zwei Schaltkreise dienen und eine Phasendifferenz in ihren Öffnungs- und Schließperioden vorliegt, wodurch die Umdrehung im Uhrzeigersinn und die Umdrehung gegen den Uhrzeigersinn in vollständig unterschiedliche Ausgangssignale umgewandelt werden.

2. Steuerschaltung (1) nach Anspruch 1, **dadurch gekennzeichnet, dass** die Ausleseschaltung (4) einen einzelnen Anschluss umfasst, der mit dem zweiten Punkt verbunden ist und in den Mikroprozessor (2) eintritt.

## Revendications

1. Un circuit de commande (1) comprenant ;
• un microprocesseur (2), et
• un codeur rotatif (3) présentant au moins trois bornes de sortie (A, B, C)
et
• un circuit de lecture (4) qui est situé entre le codeur rotatif (3) et le microprocesseur (2) et qui empêche le codeur rotatif (3) de prendre des lectures imprécises en convertissant les signaux numériques reçus du codeur rotatif (3) en signaux analogiques,
• où une première et une deuxième des trois bornes de sortie (A et B) sont utilisées comme des bornes de transmission de données (A et B) du codeur rotatif (3) et la troisième borne comme une borne commune (C) du codeur rotatif (3),
**caractérisé en ce que** lesdites première et deuxième bornes de sortie (A et B) sont reliées au une seule quatrième borne, **en ce que** ledit codeur rotatif comprend en outre deux circuits d'impédance (5 et 15) qui sont reliés l'un à l'autre en série où un premier des circuits d'impédance (5) n'est pas mis à la terre et un deuxième des circuits d'impédance (15) est mis à la terre et **en ce que** ladite quatrième borne est reliée au premier circuit d'impédance (5) au premier point (J1) et la troisième borne (C) est reliée à un deuxième point (J2) lorsque les deux circuits d'impédance (5 et 15) sont reliés l'un à l'autre, où la configuration est telle que les bornes de sortie (A, B, C) agissent comme deux circuits de commutation et il y a un différence de phase dans ces périodes d'ouverture et de fermeture, ce qui a pour effet de convertir les rotations dans le sens horaire et antihoraire en signaux de sortie complètement différents.

2. Un circuit de commande (1) selon la Revendication 1, **caractérisé par** ledit circuit de lecture (4) comprenant une seule borne qui est reliée audit deuxième point et entre dans le microprocesseur (2).
